# EUROPEAN PATENT APPLICATION

(11) **EP 3 337 148 A1**
(43) Date of publication of application: **20.06.2018**
(21) Application number: 16835135.1
(22) Date of filing: 08.08.2016
(51) Int. Cl.: H04M 3/42, G06Q 10/04, G06Q 50/10

(54) **WAIT TIME ESTIMATION SYSTEM AND WAIT TIME ESTIMATION METHOD**

(30) Priority: 10.08.2015 JP 2015158371
(71) Applicant: Recruit Holdings Co., Ltd., Tokyo 104-0061 (JP)
(72) Inventor: MAEZAWA, Ryuichiro, Tokyo 100-6640 (JP); OKUBO, Kazunori, Tokyo 100-6640 (JP)
(74) Representative: EIP
(86) International application number: PCT/JP2016/073285
(87) International publication number: WO 2017/026438

(57) **Abstract**

There is provided a waiting time estimation system (1) for estimating a user waiting time by detecting a mobile terminal (300) capable of wireless communication. The waiting time estimation system (1) includes a congestion sensing terminal (100) and an analysis server (200) connected to the congestion sensing terminal so as to be capable of communication with the congestion sensing terminal. The congestion sensing terminal (100) transmits information on a mobile terminal (300) which is an issuer of a probe request to the analysis server (200). The analysis server (200) calculates an estimated value of a waiting time for a user who holds the mobile terminal (300) by performing predetermined computation using a first time of issuance of the probe request by the mobile terminal (300) and a second time of issuance of the probe request by the mobile terminal (300) on the basis of the information on the mobile terminal (300) received from the congestion sensing terminal (100).

## Description

### Cross-Reference to Related Application

The present application is based on Japanese Patent Application No. 2015-158371, filed on August 10, 2015, the disclosure of which is incorporated herein by reference.

### Technical Field

The present disclosure relates to a technique for estimating a time to be spent waiting for, for example, an attraction of a theme park.

### Background Art

There has been a need to inform a user of a time to be spent waiting (a waiting time) in a facility, such as an attraction of a theme park. To meet such a need, in each facility, a waiting time has been empirically estimated from the length of (the number of people in) a queue, and the estimated waiting time has been presented to a user. Japanese Patent Laid-Open No. 2005-189921 (Patent Literature 1) discloses a waiting time display system for counting customers who pass through an admission gate and customers who pass through an entrance using counter devices with built-in sensors, calculating a waiting time on the basis of these count values and in view of facility information, and displaying the waiting time.

In the conventional method that empirically estimates a waiting time, a staff member of a facility visually measures the length of a queue, and the frequency with which a staff member checks a queue is not necessarily high. This has the disadvantage that an accurate waiting time is not necessarily presented. Since the prior-art technique disclosed in Patent Literature 1 requires a counter device or the like which counts the number of customers, there are constraints on a system installation location. It is thus difficult to use the method and the technique to estimate a queue, for example, at a temporary event site or in a limited-time-only attraction. Additionally, a relatively complex configuration including a counter device and the like is necessary, which incurs a large cost.

### Citation List

### Patent Literature

Patent Literature 1: Japanese Patent Laid-Open No. 2005-189921

### Disclosure of Invention

### Technical Problem

An invention according to a predetermined embodiment of the present disclosure has as one object to provide a technique capable of estimating a waiting time with high accuracy, using a wireless signal generated by a mobile terminal. Other objects of the present invention will be apparent with reference to the entire description in the present specification.

### Solution to Problem

A system according to a predetermined embodiment of the present invention is (a) a waiting time estimation system for estimating a user waiting time by detecting a mobile terminal capable of wireless communication, including (b) a congestion sensing terminal and (c) an analysis server connected to the congestion sensing terminal so as to be capable of communication with the congestion sensing terminal, wherein (d) the congestion sensing terminal transmits information on the mobile terminal that is an issuer of a probe request to the analysis server, and (e) the analysis server calculates an estimated value of a waiting time for a user who holds the mobile terminal by performing predetermined computation using a first time of issuance of the probe request by the mobile terminal and a second time of issuance of the probe request by the mobile terminal on the basis of the information on the mobile terminal received from the congestion sensing terminal.

### Advantageous Effect of Invention

The invention according to the predetermined embodiment of the present disclosure allows high-accuracy estimation of a waiting time using a wireless signal generated by a mobile terminal.

### Brief Description of Drawings

[Figure 1] Figure 1 is a diagram showing a schematic configuration of a waiting time estimation system according to an embodiment.
[Figure 2] Figure 2 is a block diagram showing a functional configuration of a congestion sensing terminal.
[Figure 3] Figure 3 is a diagram showing an example of the content of congestion sensing information.
[Figure 4] Figure 4 is a block diagram showing a functional configuration of an analysis server.
[Figure 5] Figure 5 is a flowchart showing the operation procedure of each congestion sensing terminal.
[Figure 6] Figure 6 is a flowchart showing the operation procedure of the analysis server.
[Figure 7] Figure 7 is a chart for explaining computation for waiting time estimation.
[Figure 8] Figure 8 is a schematic chart showing an output example of estimation information.
[Figure 9] Figure 9 is a schematic chart showing an output example of estimation information.

### Description of Embodiment

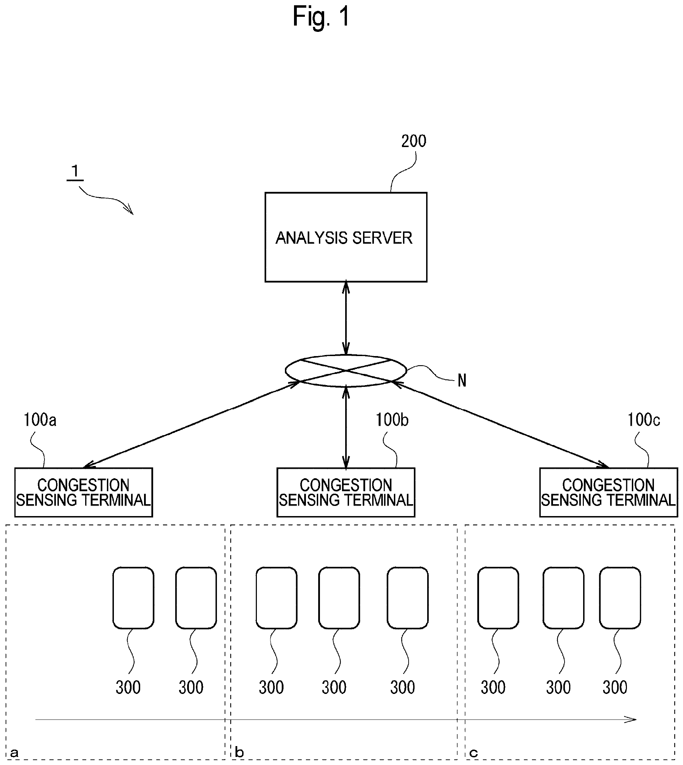

Figure 1 is a diagram showing a schematic configuration of a waiting time estimation system according to an embodiment. As shown in Figure 1, a waiting time estimation system 1 is configured to include a plurality of congestion sensing terminals 100a, 100b, and 100c which are installed in association with areas a, b, and c, in which a queue for an attraction or the like is formed, and an analysis server 200 which is connected to the congestion sensing terminal 100a and the like via a communication network N.

In the present embodiment, the congestion sensing terminal 100a or the like senses a mobile terminal 300 which has a wireless LAN function (Wi-Fi function) on the basis of the wireless fidelity (Wi-Fi) standards, and a result of the sensing is analyzed in the analysis server 200. With this analysis, a waiting time for a user (an owner of the mobile terminal 300) waiting is estimated for each of the areas, in which the congestion sensing terminal 100a and the like are installed, and for all the areas a to c. Assume here that a queue is formed to extend from the area a to the area c and that each user advances from the area a toward the area c.

The plurality of congestion sensing terminals 100a, 100b, and 100c are, for example, terminal devices for sensing the mobile terminal 300 that is held by a user waiting for an attraction or the like. The congestion sensing terminals 100a, 100b, and 100c are associated with the areas a to c, over which a queue of users is formed, and are installed at some distance from each other. Each congestion sensing terminal 100a or the like is, for example, configured to include a small personal computer (PC), a Wi-Fi module, a power source, an external storage device (an SD card or a USB memory), and the like.

The analysis server 200 is, for example, composed of a computer high in computing power. A predetermined server program is executed in the computer, thereby implementing a server function. The analysis server 200 estimates a waiting time required for a user waiting in a queue to enter into the area a, exit from the area c, and go to an attraction or the like by analyzing congestion sensing information transmitted from the congestion sensing terminal 100a and the like. Note that the number of computers constituting the analysis server 200 is not necessarily one and that the analysis server 200 may be composed of a plurality of computers distributed over the communication network N.

The communication network N includes a communication network in which information communication between the analysis server 200 and the congestion sensing terminal 100a and the like is possible. The communication network N may be, for example, the Internet, a LAN, a leased line, a telephone line, an intranet, a mobile communication network, Bluetooth, Wi-Fi, any other communication line, or any combination thereof. The communication network N may be wired or wireless.

A plurality of mobile terminals 300 are terminals which are held by respective users and each have a Wi-Fi function for wireless communication via an access point (AP) (not shown) or the like. Although the present embodiment assumes that the mobile terminal 300 is a smartphone, the mobile terminal 300 is applicable to every terminal having a Wi-Fi function, such as a mobile phone handset, a PHS, a personal computer (PC), a notebook PC, a personal digital assistant (PDA), or a home-use gaming console.

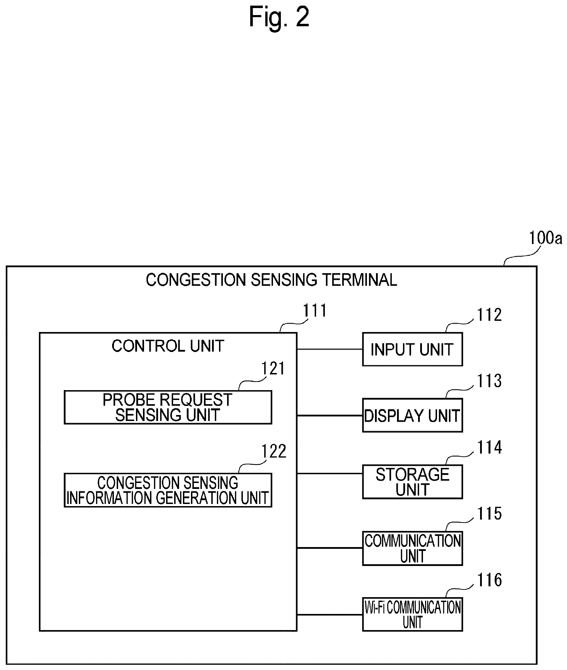

Figure 2 is a block diagram showing a functional configuration of a congestion sensing terminal. Note that although the congestion sensing terminal 100a is shown in Figure 2, the other congestion sensing terminals 100b and 100c have the same configuration. As shown in Figure 2, the congestion sensing terminal 100a includes a control unit 111, an input unit 112, a display unit 113, a storage unit 114, a communication unit 115, and a Wi-Fi communication unit 116.

The control unit 111 is, for example, constructed by causing a computer system including a CPU, a ROM, a RAM, and the like to execute a predetermined operation program and includes a probe request sensing unit 121 and a congestion sensing information generation unit 122 as functional blocks.

The input unit 112 is, for example, input means, such as a keyboard, connected to the control unit 111, and is used to enter various types of information. The display unit 113 is, for example, display means, such as a liquid crystal display panel, connected to the control unit 111 and displays various types of images. The storage unit 114 is storage means, such as a hard disk drive, connected to the control unit 111 and stores an operation program to be executed by the control unit 111 and various types of data.

The communication unit 114 is connected to the control unit 111 and performs processing associated with information communication with the external analysis server 200. The Wi-Fi communication unit 116 performs processing associated with information communication with each mobile terminal 300.

The probe request sensing unit 121 senses a probe request which each mobile terminal 300 periodically broadcasts to search for an access point. The probe request is received via the Wi-Fi communication unit 116.

The congestion sensing information generation unit 122 generates congestion sensing information which is configured to include, e.g., terminal address information which is information for identifying the mobile terminal 300, a probe request from which is sensed. The generated congestion sensing information is transmitted to the analysis server 200 via the communication unit 115.

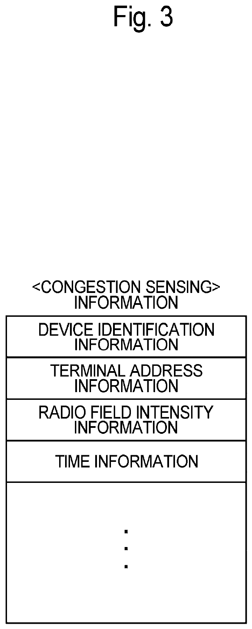

Figure 3 is a diagram showing an example of the content of congestion sensing information. As shown in Figure 3, congestion sensing information includes "terminal address information (a MAC address)" which is information for identifying each mobile terminal 300 sensed by each congestion sensing terminal 100a or the like, "radio field intensity information" which is information indicating the intensity of radio waves generated by the mobile terminal 300, and "time information" which is information indicating a time of sensing of a probe request from the mobile terminal 300. The congestion sensing information also includes "device identification information" which is information for identifying by which of the congestion sensing terminals 100a to 100c the congestion sensing information is generated.

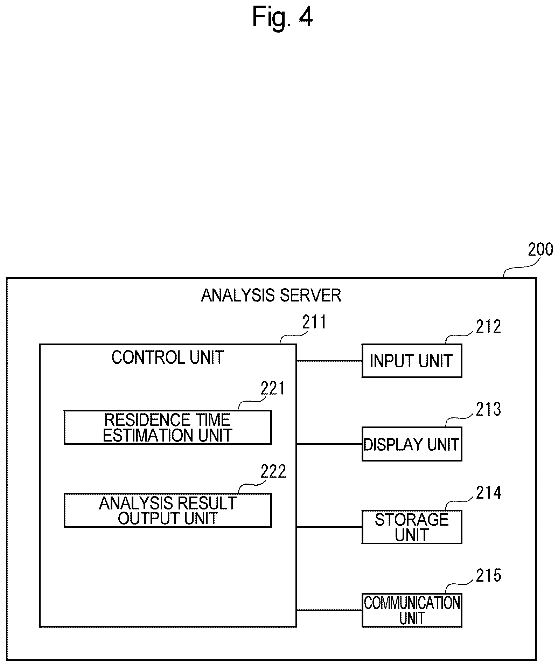

Figure 4 is a block diagram showing a functional configuration of an analysis server. The analysis server 200 estimates a waiting time for a user (a holder of the mobile terminal 300) waiting in an area associated with an installation location of each congestion sensing terminal 100a or the like by analyzing congestion sensing information transmitted from the congestion sensing terminal 100a or the like. The analysis server 200 includes a control unit 211, an input unit 212, a display unit 213, a storage unit 214, and a communication unit 215.

The control unit 211 is, for example, constructed by causing a computer system including a CPU, a ROM, a RAM, and the like to execute a predetermined operation program and includes a residence time estimation unit 221 and an analysis result output unit 222 as functional blocks.

The input unit 212 is, for example, input means, such as a keyboard, connected to the control unit 211 and is used to enter various types of information. The display unit 213 is, for example, display means, such as a liquid crystal display panel, connected to the control unit 211 and displays various types of images. The storage unit 214 is storage means, such as a hard disk drive, connected to the control unit 211 and stores an operation program to be executed by the control unit 211 and various types of data.

The residence time estimation unit 221 estimates a user waiting time (residence time) in an area corresponding to each of the congestion sensing terminals 100a by performing predetermined computation using congestion sensing information transmitted from the congestion sensing terminal 100a or the like. For example, the residence time estimation unit 221 extracts a time t1 of first sensing of a probe request by the particular mobile terminal 300 in the area a and a time t2 of last sensing of a probe request by the mobile terminal 300 in the area c using congestion sensing information, thereby calculating a waiting time spent by a user who holds the mobile terminal 300.

The analysis result output unit 222 performs processing for outputting an estimated waiting time and other information. For example, the analysis result output unit 222 creates a graph or the like to promote visual understanding of a magnitude relation among the lengths of waiting times for the respective areas, with which the congestion sensing terminals 100a, 100b, and 100c are associated, and causes the display unit 213 to display the graph or the like.

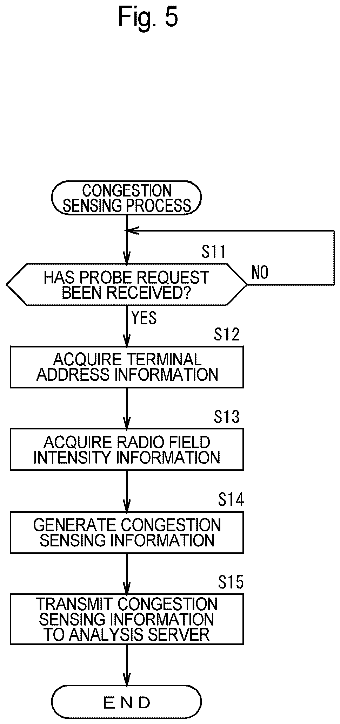

Figure 5 is a flowchart showing the operation procedure of each congestion sensing terminal. Although the operation procedure of the congestion sensing terminal 100a is described here as an example, the other congestion sensing terminals 100b and 100c operate in accordance with the same operation procedure.

The probe request sensing unit 121 of the congestion sensing terminal 100a judges whether a probe request from the mobile terminal 300 present in the neighborhood has been received by the Wi-Fi communication unit 116 (step S11). The process in step S11 is repeated until a probe request is received (NO in step S11). Note that each mobile terminal 300 periodically broadcasts a probe request to search for a connectable access point.

When a probe request is received (YES in step S11), the probe request sensing unit 121 acquires terminal address information included in the probe request (step S12) and acquires, from the Wi-Fi communication unit 116, radio field intensity information which indicates the intensity of radio waves generated by the mobile terminal 300 that is the transmitter of the probe request (step S13) .

The congestion sensing information generation unit 122 then generates congestion sensing information which includes "the terminal address information" of the sensed mobile terminal 300, "the radio field intensity information" for the mobile terminal 300, "time information" which indicates a time of the sensing of the probe request from the mobile terminal 300, and "device identification information" which is information for identifying the congestion sensing terminal 100a (step S14). The congestion sensing information is transmitted to the analysis server 200 via the communication unit 115 (step S15).

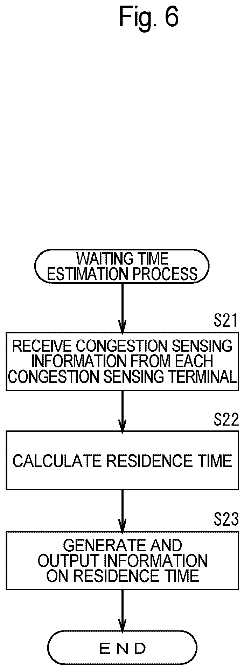

Figure 6 is a flowchart showing the operation procedure of an analysis server. The residence time estimation unit 221 of the analysis server 200 receives congestion sensing information from each of the congestion sensing terminals 100a, 100b, and 100c via the communication unit 215 (step S21).

The residence time estimation unit 221 then estimates respective user waiting times for the areas corresponding to the congestion sensing terminals 100a and a user waiting time for all the areas by performing the predetermined computation using congestion sensing information transmitted from the congestion sensing terminal 100a and the like (step S22). In step S22, the congestion sensing terminals 100a, 100b, and 100c are identified using device identification information included in the congestion sensing information, which allows estimation of the respective user waiting times for the areas corresponding to the congestion sensing terminals 100a, 100b, and 100c.

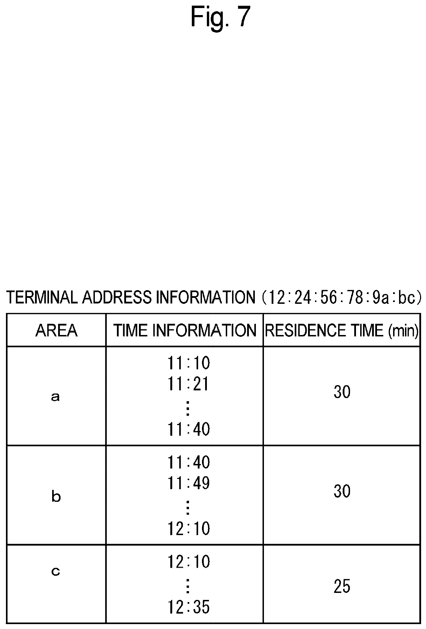

Figure 7 is a chart for explaining computation for waiting time estimation. For example, when time information included in congestion sensing information for one mobile terminal 300 identified by the terminal address information "12:34:56:78:9a:bc" are extracted and divided into ones for the area a, ones for the area b, and ones for the area c on the basis of device identification information, information as shown in Figure 7 is obtained. On the basis of the information, a waiting time in the area a is calculated to be 30 minutes from a time (11:10) of first sensing of the mobile terminal 300 in the area a and a time (11:40) of last sensing in the area a. By similar computation, a waiting time in the area b and a waiting time in the area c are calculated to be 30 minutes and 25 minutes, respectively. For this reason, a waiting time for all the areas a to c is calculated to be 85 minutes. Note that the overall waiting time may be calculated by adding up the respective waiting times in the areas or may be calculated on the basis of a difference between the time (11:00) of the first sensing of the mobile terminal 300 in the area a and a time (12:35) of last sensing in the area c.

It is also possible to estimate a waiting time for a user present in the area b at a midpoint of the queue. More specifically, the waiting time in the area b and the waiting time in the area c may be added up or a difference between a time (11:40) of first sensing of the mobile terminal 300 in the area b and the time (12:35) of the last sensing in the area c may be calculated. Use of the waiting time in the area c allows estimation of a waiting time for a user present in the area c at a midpoint of the queue. Note that, in computation of each of the waiting time for all the areas and the respective waiting times for the areas, an average of waiting times calculated for a plurality of mobile terminals 300 in the above-described manner may be calculated.

The analysis result output unit 222 of the analysis server 200 generates information (estimation information) on estimated values of the respective waiting times for the areas, an estimated value of the waiting time for all the areas (e.g., from the head to the end of the queue), or an estimated value of a waiting time for a plurality of areas (e.g., from the head of the queue to a point between the areas) calculated by the residence time estimation unit 221 and outputs the information in various forms (step S23).

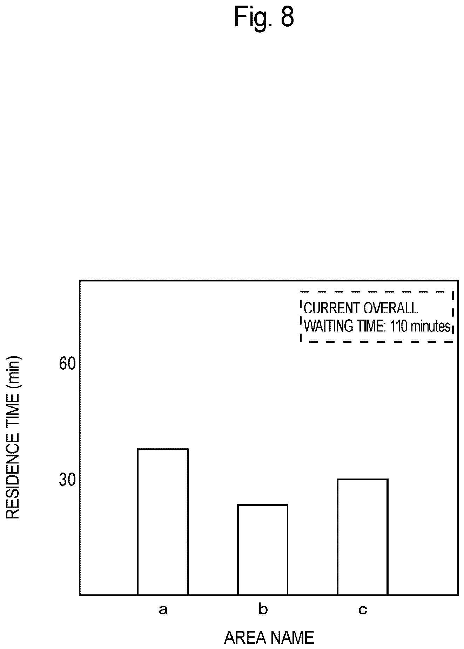

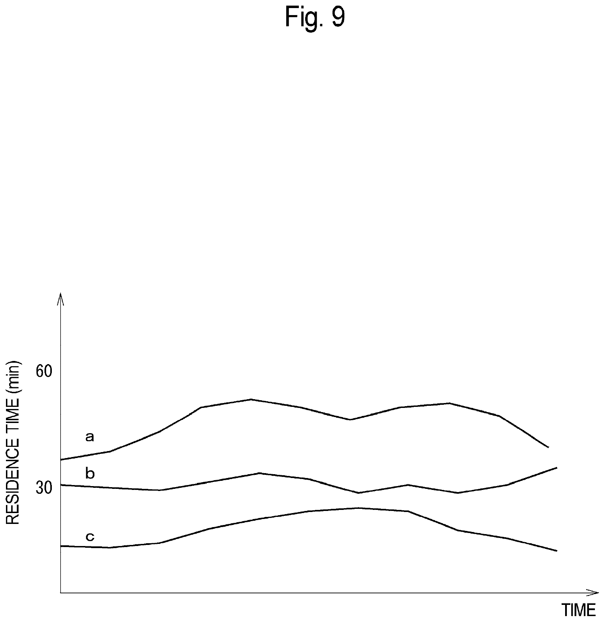

Figures 8 and 9 are each a schematic chart showing an output example of estimation information. For example, the analysis result output unit 222 generates estimation information including a bar chart indicating a waiting time at a given time in each of the areas a, b, and c associated with the congestion sensing terminal 100a and the like and character string information indicating a waiting time for all the areas a to c and displays the estimation information on the display unit 213, as illustrated in Figure 8. Alternatively, the analysis result output unit 222 generates estimation information with a line chart indicating progression of a waiting time over time for each of the areas a, b, and c associated with the congestion sensing terminal 100a and the like and displays the estimation information on the display unit 213, as illustrated in Figure 9. Numerical values themselves in estimation information may be displayed on the display unit 213 or estimation information may be transmitted to the mobile terminal 300 or a different device (not shown) and be displayed.

According to the above-described embodiment, a user waiting time can be estimated for each of areas corresponding to the congestion sensing terminal 100a and the like of a relatively wide range, in which the mobile terminal 300 and each congestion sensing terminal 100a or the like are capable of communicating with each other, and there is no limit to a location where the mobile terminal 300 and a user holding the mobile terminal 300 are present as far as radio waves can reach. It is thus possible to keep cost low and estimate a waiting time with high accuracy while keeping cost low.

Since a user waiting time can be estimated for each of the congestion sensing terminal 100a and the like, a remaining waiting time at each of respective midpoints for the congestion sensing terminals 100 can be estimated and presented even in the case of, e.g., a relatively long queue.

It is also possible to estimate, on the basis of a waiting time estimation result, where each congestion sensing terminal 100a or the like is to be installed to more efficiently measure a waiting time and optimize the installation location of the congestion sensing terminal 100a or the like.

Note that the present invention is not limited to the above-described embodiment and can be carried out in various other forms without departing from the scope of the present invention. For this reason, the embodiment is merely illustrative in all respects and is not to be construed as limiting the invention.

For example, the above-described process steps can be arbitrarily changed in order or executed in parallel without incurring a contradiction in processing details. Although the embodiment has illustrated a case where each mobile terminal 300 performs wireless communication compliant with the Wi-Fi standards, each mobile terminal 300 may perform wireless communication compliant with any other standard.

In the embodiment, each congestion sensing terminal 100a or the like is identified using device identification information included in congestion sensing information transmitted from the congestion sensing terminal 100a or the like. A source address of congestion sensing information transmitted from each congestion sensing terminal 100a or the like may be extracted on the analysis server 200 side, and the congestion sensing terminal 100a or the like may be identified on the basis of the source address.

In the embodiment, time information indicating a time of sensing of the mobile terminal 300 that is the issuer of a probe request by each congestion sensing terminal 100a or the like is included in congestion sensing information and is transmitted to the analysis server 200. Each time the analysis server 200 side receives congestion sensing information from each congestion sensing terminal 100a or the like, the analysis server 200 side may detect a time of the reception and add the time of the reception to the congestion sensing information.

In the embodiment, each time each congestion sensing terminal 100a or the like senses the mobile terminal 300 that is the issuer of a probe request, the congestion sensing terminal 100a or the like generates and transmits congestion sensing information. At predetermined time intervals (e.g., several minutes) or each time a predetermined number of probe requests from the mobile terminals 300 are sensed, congestion sensing information for the plurality of mobile terminals 300 may be integrated and transmitted to the analysis server 200.

In the embodiment, a waiting time is estimated using a plurality of congestion sensing terminals. If a queue which forms for an attraction or the like is not so long, or in other cases, a waiting time may be estimated using one congestion sensing terminal. In this case, any one of the congestion sensing terminals in the embodiment may be used to calculate a waiting time in an area associated with the congestion sensing terminal.

## Claims

1. A waiting time estimation system for estimating a user waiting time by detecting a mobile terminal capable of wireless communication, comprising:
a congestion sensing terminal; and
an analysis server connected to the congestion sensing terminal so as to be capable of communication with the congestion sensing terminal,
wherein the congestion sensing terminal transmits information on the mobile terminal that is an issuer of a probe request to the analysis server, and
the analysis server calculates an estimated value of a waiting time for a user who holds the mobile terminal by performing predetermined computation using a first time of issuance of the probe request by the mobile terminal and a second time of issuance of the probe request by the mobile terminal on the basis of the information on the mobile terminal received from the congestion sensing terminal.

2. A waiting time estimation system for estimating a user waiting time by detecting a mobile terminal capable of wireless communication, comprising:
a plurality of congestion sensing terminals; and
an analysis server connected to the plurality of congestion sensing terminals so as to be capable of communication with each of the plurality of congestion sensing terminals,
wherein each of the plurality of congestion sensing terminals transmits information on the mobile terminal that is an issuer of a probe request to the analysis server, and
the analysis server calculates an estimated value of a waiting time for a user who holds the mobile terminal by performing predetermined computation using a first time of issuance of the probe request by the mobile terminal and a second time of issuance of the probe request by the mobile terminal on the basis of the information on the mobile terminal received from each of the plurality of congestion sensing terminals.

3. The waiting time estimation system according to Claim 2, wherein
each of the plurality of congestion sensing terminals includes device identification information for identifying the congestion sensing terminal in the information on the mobile terminal and transmits the device identification information to the analysis server, and
the analysis server specifies a user waiting time for each of the plurality of congestion sensing terminals, using the device identification information.

4. The waiting time estimation system according to Claim 3, wherein
the first time is a time of first sensing of the probe request by the mobile terminal, and the second time is a time of last sensing of the probe request by the mobile terminal.

5. The waiting time estimation system according to Claim 4, wherein
the analysis server specifies a user waiting time for each of respective areas associated with the plurality of congestion sensing terminals by performing the predetermined computation using the first time and the second time and calculates an estimated value of a remaining waiting time for each of at least one point between the plurality of areas.

6. The waiting time estimation system according to Claim 5, wherein
the analysis server generates estimation information which indicates progression of a waiting time over time for each of the areas and displays the estimation information.

7. A waiting time estimation method for estimating the number of users by detecting a mobile terminal capable of wireless communication in a system including a congestion sensing terminal and an analysis server connected to each other so as to be capable of communication with each other, comprising:
a first step of transmitting, by the congestion sensing terminal, information on the mobile terminal that is an issuer of a probe request to the analysis server; and
a second step of calculating, by the analysis server, an estimated value of a waiting time for a user who holds the mobile terminal by performing predetermined computation using a first time of issuance of the probe request by the mobile terminal and a second time of issuance of the probe request by the mobile terminal on the basis of the information on the mobile terminal received from the congestion sensing terminal.
